# EUROPEAN PATENT SPECIFICATION

(11) **EP 4 341 870 B1**
(45) Date of publication and mention of the grant of the patent: **25.12.2024**
(21) Application number: 22762023.4
(22) Date of filing: 05.08.2022
(51) Int. Cl.: G06N 10/60

(54) **QUANTUM COMPUTING METHOD FOR SOLVING COMBINATORIAL OPTIMIZATION PROBLEMS**
QUANTENRECHENVERFAHREN ZUR LÖSUNG EINES KOMBINATORISCHEN OPTIMIERUNGSPROBLEMS
PROCÉDÉ DE CALCUL QUANTIQUE POUR RÉSOUDRE DES PROBLÈMES D'OPTIMISATION COMBINATOIRE

(43) Date of publication of application: 27.03.2024
(73) Proprietor: Friedrich-Alexander-Universität Erlangen-Nürnberg, 91054 Erlangen (DE)
(72) Inventor: HARTMANN, Michael, 82266 Inning (DE); SCHMID, Mathias, 91052 Erlangen (DE)
(74) Representative: 2s-ip Schramm Schneider Bertagnoll Patent- und Rechtsanwälte Part mbB
(86) International application number: PCT/EP2022/072120
(87) International publication number: WO 2024/027933

(56) References cited:
- WO-A1-2017/111937
- US-A1- 2020 302 306
- US-A1- 2020 372 390
- GARY J MOONEY ET AL: "Mapping NP-Hard Problems to Restricted Adiabatic Quantum Architectures", ARXIV.ORG, CORNELL UNIVERSITY LIBRARY, 201 OLIN LIBRARY CORNELL UNIVERSITY ITHACA, NY 14853, 1 November 2019 (2019-11-01), XP081527549
- POUYA REZAZADEH KALEHBASTI ET AL: "Ising-Based Louvain Method: Clustering Large Graphs with Specialized Hardware", ARXIV.ORG, CORNELL UNIVERSITY LIBRARY, 201 OLIN LIBRARY CORNELL UNIVERSITY ITHACA, NY 14853, 6 December 2020 (2020-12-06), XP081963211, DOI: 10.1007/978-3-030-74251-5_28

## Description

### Field of the invention

The present invention relates to a quantum computing method for obtaining an optimal solution of a combinatorial optimization problem and to a corresponding quantum computing system.

### Background of the invention

Combinatorial optimization problems occur in many areas in the industry and logistics. Typical examples include the maximum satisfiability (MaxSAT) problems, such as the travelling salesman problem, the job shop problem or the employee scheduling problem. Each of these problems may be expressed in the search for a bit-string, i.e., a sequence of zeros and ones, which minimizes the cost function of the corresponding problem. The number of possible bit-strings grows exponentially with the length of the bit-string which determines the system size. Hence, finding an exact solution already becomes infeasible for moderate system sizes. However, quantum information processing platforms may provide options for algorithms that are faster than classical computers.

Currently, two major approaches are applied for solving combinatorial optimization problems.

A first approach is termed Quantum Annealing or Adiabatic Quantum Computing.

In Quantum Annealing, the cost function of the problem is formulated as a quantum mechanical Hamilton-operator whose ground state corresponds to the solution of the problem. The ground state is prepared either using a cooling or an adiabatic dynamic. Currently, there are devices with several thousand quantum bits (qubits) that implement Quantum Annealing. However, it is unclear, if the qubits in these devices work properly, i.e., make real use of quantum properties.

A second approach, the quantum approximate optimization algorithm (QAOA) aims at generating the ground state of the Hamilton-operator through a sequence of quantum gates in a digital quantum computer. In doing so, a state is prepared in form of a quantum mechanical superposition of all possible bit-strings and a parametrized gate sequence is used to filter the best candidates for this solution from the quantum mechanical superposition. The measurement of the energy expectation value in the prepared state delivers information on the proximity of the prepared state to the sought ground state. This information is leveraged to optimize the parameters of the gate sequence in order to maximize the approximation.

The disadvantage of both known methods, Quantum Annealing and QAOA is, that the quantum processor requires as many quantum bits as the number of bits in the bit-string. In case the bit-string sequence comprises one hundred zeros and ones, for instance, finding the optimal solution requires one hundred qubits. In practice, relevant applications in the industries are based on several thousand binary distinct variables such that the corresponding bit-strings comprise several thousand bits. As a consequence, the requirement on the number of qubits of the known quantum methods is a strong limitation as long as quantum information processing platforms comprise much less than thousands of properly working qubits. The document GARY J MOONEY ET AL: "Mapping NP-Hard Problems to Restricted Adiabatic Quantum Architectures", ARXIV.ORG, CORNELL UNIVERSITY LIBRARY, 201 OLIN LIBRARY CORNELL UNIVERSITY ITHACA, NY 14853, 1 November 2019, pertains to a quantum computing method for obtaining an optimal solution of a problem with multiple discrete variables, wherein the problem is represented by a cost function, and generating a graph structure from the cost function.

Quantum computers currently only comprise about one hundred or less qubits. Furthermore, gates, i.e., the mechanism to manipulate qubits, are not perfect and the quantum information system is susceptible to noise. In the development of quantum hardware, the correction of errors is an ongoing research topic which will still require some time and it remains unknown whether fully error corrected quantum computers of practically relevant size will ever become available. The implementation of a single error corrected qubit is already very complex and requires multiple qubits. Therefore, error corrected quantum computers comprise an even lower number of error corrected qubits.

### Object of the invention

Therefore, it is object of the present invention to provide a quantum method which enables to find solutions for combinatorial optimization problems in practical applications on quantum computers whose capacity is strongly limited with respect to the problem size.

### Solution according to the invention

The solution according to the invention is a quantum computing method as specified in the independent claim 1. Preferred and/or advantageous embodiments are specified in the dependent claims.

Accordingly, a quantum computing method for obtaining an optimal solution of a problem with multiple discrete variables is provided. The problem is represented by a cost function. The method comprises:
- Generating a graph structure from the cost function,
- Dividing the graph structure into at least two disjunctive subgraph structures, wherein each subgraph structure comprises a subset of the multiple discrete variables,
- Mapping each subgraph structure to a local cost function represented as local cost Hamiltonian,
- Determining, for each local cost Hamiltonian, all eigenstates corresponding to an energy below a predetermined cut off energy using a quantum processing device, wherein each variable of the subset of multiple discrete variables is represented by a qubit of the quantum processing device,
- Recombining the determined eigenstates, and
- Approximating a ground state from the recombined eigenstates, wherein the ground state represents the optimal solution.

The step of approximating a ground state may be executed multiple times.

The cost function representing the problem with multiple discrete variables assigns a cost value to each combination of the multiple discrete variables. For typical problem sizes occurring in the industries, i.e., thousand or more discrete variables, there are so many possible combinations of the variables that a brute force calculation, which determines all possible cost values, is infeasible, even on state-of-the-art supercomputing systems.

However, it was found that the cost function typically can be represented in a graph structure. To generate this graph structure representation has the advantage that clustering methods may be applied to the graph in order to divide the graph structure and therefore the original problem size into smaller disjoint subgraph structures. Each subgraph structure comprising a subset of the multiple discrete variables may be solved independently. Hence, the method according to the invention is adapted to overcome the limitations of current and near-term quantum processing hardware. While the original problem with the large number of discrete variables is too big for a current and near-term quantum processing hardware, the division into smaller subsets allows to solve each of the subset independently on a quantum processing device.

However, it was found that typical combinatorial optimization problems are inherently frustrated. Due to frustration in the graph structure, the subgraphs cannot be considered fully decoupled from each other. Hence, the optimal solution of the original problem cannot be found in the set comprising the best solution of each of the subgraph structures.

It was the inventors who first found that the problem of frustration of the cost function can be lifted by not only determining the best solution of each subgraph structure, i.e. the ground state of each local cost Hamiltonian, but all eigenstates corresponding to an energy below a predetermined cut-off energy. It was realized that the determination of all eigenstates corresponding to an energy below the predetermined cut-off energy can be performed using the QAOA without further modifications of its quantum operations comprising the quantum gates and measurements, the only modification being in the classically evaluated cost functions. Hence, the implementation of the method according to the invention into current quantum information processing platforms is highly facilitated.

With recombining the determined eigenstates of all subgraphs, the original combinatorial optimization problem with multiple discrete variables can be reduced to a problem of the determined eigenstates. Hence, the number of discrete variables of the original problem is effectively reduced to the number of determined eigenstates. By determining the ground state of the system in the recombined eigenstate basis, the optimal solution to the combinatorial optimization problem can be approximated.

The at least two subgraph structures are interconnected. A coupling of one subgraph structure to an adjacent subgraph structure is quantified by a coupling strength. The predetermined cut-off energy is determined for each subgraph structure by summing over the coupling strength of each of its couplings.

It was found that the coupling strength provides a useful energy scale to determine which of the eigenstates of the local cost Hamiltonian of a subgraph structure should be carried on. This determination of the cut-off energy has the advantage, that the method according to the invention can be applied to any type of combinatorial optimization problem, as long as the coupling strengths between each subgraph structure are known and/or can be determined.

The determined eigenstates are recombined by generating a representation of the cost function in a reduced Hilbert space spanned by the determined eigenstates.

The Hilbert space can be considered as a vector space with a modified scalar product. In the reduced Hilbert space, the basis is formed by the determined eigenstates, and is therefore finite. The determined eigenstates can be thought of specific combinations of the multiple discrete variables of a subgraph structure.

This recombination of determined eigenstates has the advantage that the number of discrete variables of the original problem is effectively reduced to the number of determined eigenstates. By approximating the ground state in the reduced Hilbert space, the optimal solution is obtained.

In one embodiment, after recombining the determined eigenstates into the reduced Hilbert space a reduced graph structure is generated from the representation of the cost function in the reduced Hilbert space. The reduced graph structure can be divided into at least two disjoint subgraph structures and processed according to the method steps outlined above.

Preferably, the at least two disjunctive subgraph structures are determined using a heuristic clustering method from a group of methods, the group at least comprising the Louvain method.

In one embodiment, the local cost Hamiltonian for each subgraph structure comprises a penalty term, wherein the penalty term is adapted to add a predetermined penalty value to an expectation value for energy of each quantum state having an energy below the cut-off energy such that the quantum processing device is adapted to determine all eigenstates corresponding to energies below the cut-off energy first. The penalty term has the structure of a projection operator, wherein the summation runs over all quantum states having an energy below the cut-off energy and wherein each summand is scaled by a penalty value which depends on the corresponding quantum state. This structure has the advantage that the penalty term does not require any modification of the actual quantum gates used in the QAOA. Instead, the penalty term simply adds an energy value to the determined energy corresponding to a quantum state such that the determination of the quantum states with energies below the energy cut-off is prioritized. This effect results from the way expectation values, in particular the energy expectation value, are computed in quantum mechanics.

Preferably, the quantum processing device is adapted to carry out a further QAOA for approximating the ground state for the cost function in the reduced Hilbert space.

Similarly to determining the eigenstates of the local cost Hamiltonian, also the cost Hamiltonian in the reduced or renormalized Hilbert space can be determined using the quantum processing device. The QAOA used for the determination of the ground state in the reduced Hilbert space differs from the first QAOA in that the gates and circuits are configured on basis of the recombined eigenstates.

In one embodiment, the cost function representing the problem is representable by an Ising spin glass model, the Ising spin glass model being characterized by a pairwise interaction between bodies (two-body interaction), wherein the bodies are given by vertices of the graph structure to which the cost function was mapped.

The Ising spin glass model is characterized by a pairwise interaction between bodies, a so-called two-body interaction. In this case, the bodies are given by vertices of the graph structure to which the cost function was mapped. Each vertex is assigned a set of two states, e.g., |0> and |1> or |down> and |up>, and the coupling value defines an interaction/coupling strength between two vertices. In other words, each vertex of the Ising spin glass model represents a discrete variable of the combinatorial optimization problem.

Each of the at least two subgraph structures is constrained such that the cardinality of its subset of the multiple discrete variables is smaller or equal to a number of qubits of the quantum processing device.

This constraint has the advantage that each subgraph structure is small enough in order to be solved using the QAOA on the quantum processing device.

In one embodiment, each of the at least two subgraph structures is constrained such that the cardinality of its subset of the multiple discrete variables is smaller or equal to a number of error-corrected qubits of the quantum processing device.

In one embodiment, the graph structure comprises a plurality of vertices, wherein the plurality of vertices are connected by a plurality of connections. Each vertex represents a discrete variable and each connection represents an interaction between at least two discrete variables.

This graph structure is able to represent not only two-body interaction between the vertices, but also connections in the sense of three- or more-body interaction between three or more vertices.

### Brief description of the figures

Some embodiments of the invention are explained in the following with reference to the figures. Those show the following:
- Fig. 1: A schematic visualization of the method steps for obtaining the optimal solution of a combinatorial optimization problem;
- Fig. 2: A visualization of the average qubit reduction according to an embodiment of the method of the invention using two iteration steps for system sizes ranging from 12 to 32 discrete variables.

### Detailed description of the invention

In the following, the technical basis for the method according to the invention is highlighted by briefly introducing key concepts of quantum computing.

In classical computation the fundamental unit of information is the bit, taking the values of 0 or 1. In quantum computing the fundamental unit of information is encoded in quantum bits, or qubit in short. The real-world implementation of qubits is a highly researched topic at the moment. Key goals are qubits that are resistant to noise, tunable and easy to produce in high quantity. One prominent version of qubits are realized in a superconducting regime. Other technologies are based on trapped ions or neutral atoms.

Similar to a bit, the qubit also comprises a first state and a second state, however, the two states of the qubit are quantum states. Thus, the qubit can also take any superpositional state built of these two states. A superpositional state is built by a sum of the two states, wherein each state is scaled by a probability amplitude which is a complex number. The probability amplitudes are normalized, meaning that their squared values sum to 1. Note that the full information encoded in a superpositional state of a qubit cannot just be retrieved by one measurement in contrast to classical bits from which the information can be simply read out. Rather, a qubit is to be prepared in the same state over and over again and measured for multiple times. The probability amplitude for the first state then can be approximated, for instance by the number of observations of the first state divided by the number of total measurements. Similarly, the probability of observing the second state can be approximated.

It can be shown that the qubit, as long as not being measured, can evolve continuously with time on the so-called Block sphere thus taking any of infinitely many possible states bound by the Block sphere. The continuous variables are taken into account by nature which can be exploited in quantum information processing platforms.

When combining two or more qubits into a composite system, more complex quantum states can be realized. The dimension of the composite system is given by the product of the dimensions of each subsystem. Hence, for a composite system comprising n qubits the dimension scales with 2*ⁿ*. In other words, the number of continuous variables which are processed in parallel according to the quantum nature, scales exponentially in the qubit count. For as many as 500 qubits the number of dimensions is already greater than the number of atoms in the visible universe. This fact forms the basis for a significant computational speed up of a quantum computer over any state-of-the-art classical computer, which is termed quantum advantage.

The quantum state of a qubit system introduced above evolves continuously without measurement such that exponentially many probability amplitudes can be processed in parallel. In classical computations the bits are manipulated via logic gates. For quantum computations a similar principal was introduced via so called quantum gates. Since the time evolution operator in quantum mechanics is unitary, the gates to manipulate the qubits also have to fulfil this requirement, i.e., the evolution of a quantum state has to be reversible.

In quantum computing the qubit gates are representable by any 2 x 2 matrix that is unitary, in particular the Pauli matrices. For instance, a NOT gate for a single qubit can be realized by the Pauli X-matrix. For multiple qubit gates, i.e., gates acting on multiple qubits, one prominent example is the controlled-NOT gate, often also called CNOT. Every other multiple qubit gate can be decomposed into CNOTs and single qubit gates such that actually a limited amount of single qubit gates is required to achieve a universal gate set as known from classical computing.

For quantum computing the qubits and the gates used to manipulate the qubits are combined into full quantum circuits. In short, quantum circuits follow a similar scheme as their classical counterparts:
- Prepare the initial input state, e.g., by cooling the system to appropriate temperatures;
- Apply a sequence of quantum gates;
- Measure the state of some or all qubits.

Next, a bridge is built between combinatorial optimization problems as occurring on a daily basis in the industries and quantum computers. It will be explained how a combinatorial optimization problem can be formulated to be solved on a quantum computer. Combinatorial optimization may be a very good candidate for applications of quantum computers since these have the ability to explore the Hilbert space, i.e., the solution space translated into the quantum world, with superposition of basis states. In other words, quantum computers are able to process many possible candidates for solutions in parallel.

A combinatorial optimization problem is characterized by a cost function which maps a countable set of solutions onto real values, often denoted cost values. The goal of the optimization process is to find a solution of the set of solutions such that the cost function returns the lowest cost value. In the following we are focusing on optimization problems of which the solutions are bit-strings of length *n.* In order to solve the combinatorial optimization problem using quantum computers, the classical cost function needs to be converted to a Hamiltonian. A Hamiltonian is an operator which assigns energy values to the quantum states of a system. The quantum state with the lowest energy of a Hamiltonian is called the ground state. Hence, by converting the classical cost function to a Hamiltonian, the combinatorial optimization problem is translated into a problem of finding the ground state of the corresponding Hamiltonian.

The problem of approximating the ground state of a Hamiltonian can be solved with variational quantum solvers. One possible algorithm for variational optimization is the QAOA, which approximates the ground state of a system.

The ground state of a system is characterized in that it is assigned the lowest energy value of the system through the Hamilton-operator. The variational optimization is based on the Ritz-Rayleigh variational principle: Select an arbitrary wave function in the basis of the exact eigenstates of the Hamilton-operator. It can be shown that the energy expectation value of this selected wave function is larger or equal to the ground state energy. Hence, when parametrizing the selected wave function in terms of one or more parameters, the parameters can be optimized such that the energy expectation value of the wave function becomes minimal. The wave function characterized by the parameters in which the energy expectation value is minimal therefore can be considered as the approximated ground state of the Hamiltonian. The energy value which corresponds to the Hamiltonian acting on the approximated ground state therefore is considered as the ground state energy. Depending on the parametrization of the wave function, the approximated ground state may even correspond to the exact ground state.

In QAOA the parametrization of the wave function is based on two parameter vectors. The expectation value of the prepared wave function is approximated by its repeated measurement in the computational basis realized by the quantum circuit.

The best parameters are then determined by iteratively calling a classical optimizer, making QAOA actually a hybrid algorithm.

As discussed above, cost functions of combinatorial optimization problems may be represented by a Hamiltonian. The Hamiltonian in general has the form of a sum over all active qubits, wherein the sum runs over every product between the Pauli Z-gates acting on the qubits.

The Hamiltonian may thus comprise an identity term which only gives rise to a global phase and can thus be neglected. The Hamiltonian may further comprise a linear term, which also does not carry significant information. The first relevant term in the Hamiltonian is the quadratic term. The quadratic term defines a sum over all pairs of two Z-gates scaled by a coupling value which depends on the involved Z-gates. The coupling value therefore encodes a two-body interaction between two qubits. Hamiltonians containing only the quadratic term are called Ising spin glass models. It is known that finding configurations yielding the ground state of a Ising spin glass model is non-deterministic polynomial (NP) hard for general instances. Many highly relevant optimization problems in the industries can be mapped to such a Hamiltonian, including the travelling salesman problem and the max-cut problem. The Ising spin glass Hamiltonian then can be mapped to a graph, or represented by a graph, enabling us to use tools from graph theory to our advantage.

The Hamiltonian may further comprise cubic or higher order terms, comprising coupling values representing a three-body or multi-body interaction. Also such Hamiltonians may be partitioned into clusters and may thus be solved using the invention.

A graph comprises multiple vertices, also called nodes, and connections between the vertices. In the case of a quadratic Hamiltonian, the connections are reduced to edges between the vertices. In the following we consider an embodiment of the invention with a quadratic term of the Hamiltonian. Nonetheless, the concept discussed below similarly applies to Hamiltonians comprising cubic and high order terms.

In the case of a quadratic Hamiltonian each edge comprises a pair of vertices, also called endpoints that are connected via a respective edge. Additionally, a weight is attached to each edge of the graph. The weight is given by the coupling value between two respective endpoints. Each term of the cost Hamiltonian is converted into an undirected edge having the weight corresponding to the coupling value. Additionally, the vertices are assigned as state attribute to represent the state of the discrete variable. As a result, the original combinatorial optimization problem is completely mapped onto the graph which then can be used to determine the energies assigned to its quantum states. In case the cost Hamiltonian comprises an extra linear term, this term can be taken into account by assigning each vertex an additional local constant defined by the scaling factor of this linear term.

Having mapped the optimization problem onto the graph, it is aimed to divide the graph structure into subsystems. Subsystems are subsequently also called subgraph structures or communities of the graph. Usually, graphs intend to have sets of vertices which group together and act relatively independent from the other vertices in the graph. This property was found particularly in case of graphs representing social networks and may be exploited by dividing the graph into disjoint subsets, called communities. While the vertices within a subset are densely connected, the communities have only a few connections with each other. The union of all communities results in the entire graph.

In order to divide the graph structure into subsystems, an algorithm can be used which partitions the graph into communities. One particularly useful algorithm is the Louvain algorithm, which is based on a modularity optimization. Modularity is a measure that quantifies how good a division of a graph into different communities is. Note that the communities can be unconstrained in their size such that it is not enough to minimize only intercommunity edges. The modularity is normalized between 0 and 1, wherein a value of 0 expresses that the modularity is not better than assigning communities at random and a value close to 1 indicates a strong community structure.

The Louvain method is a heuristic method used to extract community structures of large graphs within small computational time. In contrast, exact modularity optimization is computationally hard. Other methods, in particular heuristic methods, may be applied similarly to divide the graph structure into disjoint communities.

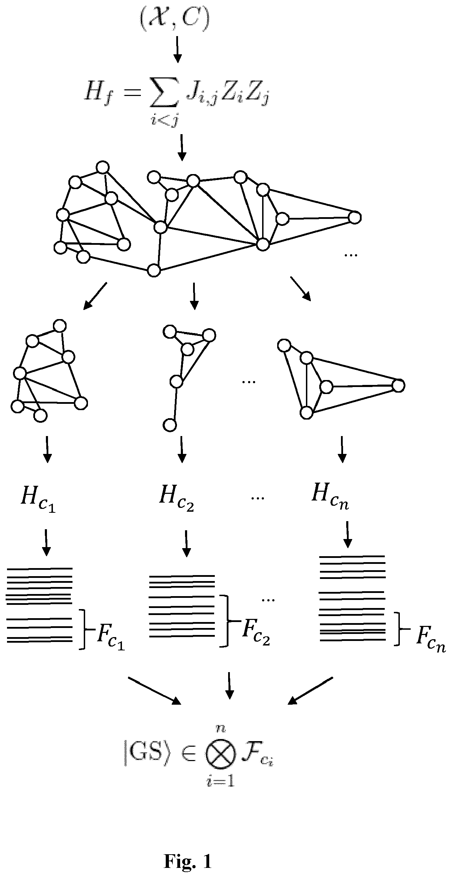

**Fig. 1** shows a schematic overview of the method steps of an embodiment of the method according to the invention using a quadratic cost Hamiltonian.

First, the combinatorial optimization problem, expressed by (χ, C), wherein χ denotes the solution space and C the cost function, is mapped onto a cost Hamiltonian *H_{C}* as outlined above. In this example the cost Hamiltonian *H_{C}* has a quadratic form, therefore representing an Ising spin glass model. After mapping the cost Hamiltonian onto a graph structure, the graph is divided into communities using methods described above. Each community is assigned a local cost Hamiltonian denoted *H*_{*c*₁}*, H*_{*c*₂},..., *H_{cₙ}.* After clustering the graph, the original cost Hamiltonian can be expressed as a sum over each of the local cost Hamiltonians and an intercommunity term.

Instead, for each subsystem with local cost Hamiltonian we use QAOA to find all quantum states with energies below a predetermined cut-off energy. These quantum states comprise the ground state of each subsystem and a few excited states. In doing so, the eigenstates of the respective subsystem are chosen to be the computational basis states. Hence, the *k*-th excited state can be efficiently found with modifying the local cost Hamiltonian by adding a penalty to all quantum states with energies below the *k*-th excited state. Since the quantum circuit generated by the QAOA does not depend on which eigenstate is the lowest energy state, the modified local cost Hamiltonian including the penalty term can be implemented with exactly the same gate sequence as the original local cost Hamiltonian. The penalty term only modifies the classical energy evaluation of the measured computational basis state.

Since we are not only interested in the *k*-th exited state but in all lower-lying quantum states, this iterative procedure provides a certain robustness in cases in which QAOA is not able to find the lowest possible quantum state immediately. The penalty term is adapted for each iteration, depending on which excited state to be found.

For example, when trying to find the four lowest lying energy states of a subsystem, wherein in the second iteration the third quantum state is found by QAOA instead of the second quantum state, the local cost Hamiltonian applied for the third iteration includes penalty terms of the ground state and the third quantum state, but not the second quantum state. Thus, in the third iteration of the QAOA, the missing second quantum state can be found. This iterative procedure is continued until a certain threshold is reached, i.e., an energy assigned to a quantum state exceeding the cut-off energy.

The penalty term is assigned a magnitude through a penalty value. On the one hand the penalty value has to be large enough such that the same quantum state is not found twice and on the other hand choosing the penalty value too large changes the energy landscape which have negative impacts on the optimization process. It was found that the penalty value is optimal when determined from the difference between the energy assigned to the quantum state to be penalized and the ground state energy of the community plus a cut-off energy.

The cut-off energy for each cluster does not only depend on the community itself but is found to be most useful when based on the intercommunity edges. In determining a useful range for the cut-off energy, thus the intercommunity term of the original cost Hamiltonian may serve for finding an upper boundary condition.

It was found that the cut-off energy for a selected community is given by the sum of the coupling strength of every intercommunity edge which is connected to this specific community. Therefore, a configuration of qubits, i.e., a quantum state inside this specific community which has an energy exceeding the sum of the ground state energy and the cut-off energy of this specific community cannot be part of the full system ground state. This results from the fact that communities are, with exception of the intercommunity edges, isolated from each other. The contribution of these intercommunity edges adds at most an energy term given by the cut-off energy. As a result, the ground state |GS> is found in the set of all combinations of found states *F*_{*c*ᵢ} within the cut-off energy range of every community.

Next, the determined quantum states are recombined.

According to the invention, the determined quantum states are recombined such that the QAOA may be applied on the recombined problem to find the ground state of the cost Hamiltonian. For this, the determined quantum states of every subgraph structure are assigned to new qubit states. The number of qubits needed grows logarithmically with the number of determined quantum states *F*_{*c*ᵢ} in each community *cᵢ*. The newly assigned qubit states span a reduced Hilbert space. In other words, the determined quantum states of the subgraph structures form the basis states of the reduced Hilbert space.

The cost Hamiltonian represented in the basis of the reduced Hilbert space, subsequently also called renormalized cost Hamiltonian, consists of two terms. The first term of the cost Hamiltonian sums over the different communities, wherein the summand is a diagonal matrix in which the diagonal elements are given by the determined energy levels in the respective community. Hence, each entry assigns the corresponding energy of the determined quantum states found in the earlier optimization process to the reduced qubit states. The second term sums over all community pairs wherein the summand is a diagonal matrix in which the diagonal entries assign an intercommunity coupling weight to every reduced qubit state pair. From this renormalized cost Hamiltonian, the gates for the QAOA may be generated. The diagonal matrices commute such that the gates corresponding to the summands can be applied separately in the gates sequence of a QAOA algorithm. Instead of solving the renormalized cost Hamiltonian directly, one can also consider to repeat the previous method steps for the renormalized cost Hamiltonian. In other words, one may map the renormalized cost Hamiltonian onto a graph structure. Subsequently, the graph structure may be divided into several disjoint subgraph structures, wherein each subgraph structure is assigned a local cost Hamiltonian. For each subgraph structure, a local cost Hamiltonian derived from the renormalized cost Hamiltonian is solved, i.e., all eigenstates having an energy below a predetermined cut-off energy are determined. The new cut-off energy is again given by the sum over all intercommunity couplings. The determined quantum states of each community are recombined and a further renormalized Hamiltonian in a further reduced Hilbert space is determined. This process can be repeated until the ground state of the cost Hamiltonian is found. In particular for graphs with strong hierarchical community structures, the iterative process is advantageous.

The method thus can be summarized by:
1. Given a combinatorial optimization problem instance, pick the number of iterations;
2. Convert the cost function of the combinatorial optimization problem into a graph;
3. Use a clustering algorithm to divide the graph into subgraphs;
4. Determine the cut-off energies for each subgraph;
5. Solve the local cost Hamiltonian of each subgraph structure to determine the quantum states having energies below the cut-off energy;
6. Represent the determined quantum state in a reduced basis;
7. Calculate the renormalized Hamiltonian in the reduced basis;
8. If your current iteration is not the last, go to step 2;
9. Solve the full system, i.e. determine the ground state of the renormalized Hamiltonian corresponding to the optimal solution of the combinatorial optimization problem.

It was shown by the inventors that the method according to the invention can determine the ground state of the cost Hamiltonian for different graph structures.

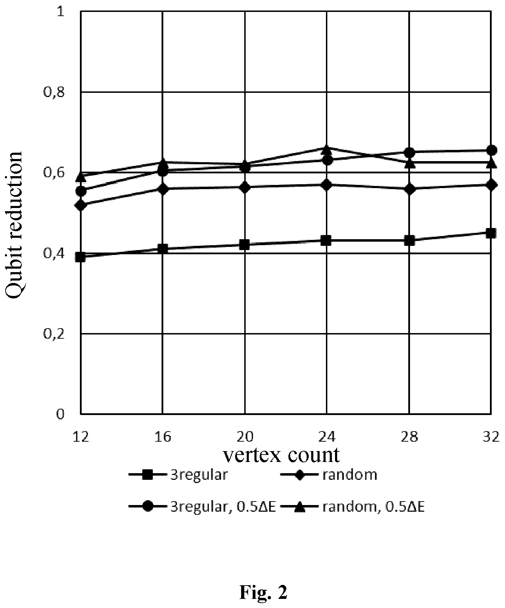

Fig. 2 shows a diagram depicting the average qubit reduction when using the method according the invention with two iteration steps.

In these simulation, the number of discrete variables ranges from 12 to 32, resulting in 12 to 32 vertices in each graph. For 12 and 16 vertices the result was averaged over 1000 data samples each. For higher vertex counts, the average includes 100 data samples each. The bars pointing in y-direction represent the standard deviation.

It was found that in case of 3-regular graphs the reduction in qubits ranges from approximately 39% up to 49 %. In the less densely connected Erdős-Rényi graph structure a reduction of approximately 53% up to 60% was detected.

It was also tested to reduce the cut-off energy by 50% in order to reduce the number of determined quantum states carried on from each community. For the reduced cut-off energy version the reductions in the number of qubits ranges from approximately 56% up to 68% for the 3-regular graphs and from approximately 59% up to 66% for the Erdős-Rényi graphs.

These results indicate a considerable reduction on hardware requirements on the quantum information processing platforms. A clear trend for even greater reduction towards larger system sizes is indicated. Notably, the 3-regular graphs and ErdősRényi graphs usually have weak community structures. Hence, even larger qubit reduction potential is expected for graph structures which are naturally dividable into communities.

## Claims

1. Quantum computing method for obtaining an optimal solution of a problem with multiple discrete variables, wherein the problem is represented by a cost function, the method comprising:
- generating a graph structure from the cost function,
- dividing the graph structure into at least two disjunct subgraph structures, wherein each subgraph structure comprises a subset of the multiple variables,
- mapping each subgraph structure to a local cost function represented as local cost Hamiltonian,
- determining, for each local cost Hamiltonian, all eigenstates corresponding to an energy below a predetermined cut off energy using a quantum processing device, wherein each variable of the subset of multiple variables is represented by a qubit of the quantum processing device, wherein the at least two subgraph structures are interconnected, wherein a coupling of one subgraph structure to an adjacent subgraph structure is quantified by a coupling strength, and wherein the predetermined cut off energy is determined for each subgraph structure by summing over the coupling strength of each of its couplings, and wherein each of the at least two subgraph structures is constrained such that the cardinality of its subset of the multiple variables is smaller or equal to a number of qubits of the quantum processing device,
- recombining the determined eigenstates, wherein the determined eigenstates are recombined by generating a representation of the cost function in a reduced Hilbert space (cost Hamiltonian) spanned by the determined eigenstates, the cost Hamiltonian consisting of two terms,
- wherein the first term of the cost Hamiltonian sums over the different communities, wherein the summand is a diagonal matrix in which the diagonal elements are given by the determined energy levels in the respective community, and
- wherein the second term sums over all community pairs wherein the summand is a diagonal matrix in which the diagonal entries assign an intercommunity coupling weight to every reduced qubit state pair, and
- approximating a ground state from the recombined eigenstates, wherein the ground state represents the optimal solution.

2. Quantum computing method according to any of the preceding claims, wherein the quantum processing device is adapted to carry out a first quantum approximate optimization algorithm for determining the eigenstates of each local cost Hamiltonian.

3. Quantum computing method according to the preceding claim, further generating a reduced graph structure from the representation of the cost function in the reduced Hilbert space, and recursively repeating the method steps of claim 1 for the reduced graph structure.

4. Quantum computing method according to any of the preceding claims, wherein the at least two disjunct subgraph structures are determined using a heuristic clustering method.

5. Quantum computing method according to the preceding claim, wherein the heuristic clustering method is the Louvain method.

6. Quantum computing method according to any of the preceding claims, wherein the local cost Hamiltonian for each subgraph structure comprises a penalty term, wherein the penalty term is adapted to add a predetermined penalty constant to the energy value of each quantum state having an energy below the cut off energy such that the quantum processing device is adapted to determine all eigenstates corresponding to energies below the cut off energy.

7. Quantum computing method according to claim 2, wherein the quantum processing device is adapted to carry out a further quantum approximate optimization algorithm for approximating the ground state of the cost function in the reduced Hilbert space.

8. Quantum computing method according to any of the preceding claims, wherein the cost function representing the problem is representable by an Ising spin glass model, the Ising spin glass model being **characterized by** a pairwise interaction between bodies (two-body interaction), wherein the bodies are given by vertices of the graph structure to which the cost function was mapped.

9. Quantum computing method according to any of the preceding claims, wherein each of the at least two subgraph structures is constrained such that the cardinality of its subset of the multiple variables is smaller or equal to a number of error-corrected qubits of the quantum processing device.

10. Quantum computing method according to any of the preceding claims, wherein the graph structure comprises a plurality of vertices, wherein the plurality of vertices are connected by a plurality of connections, wherein each vertex represents a discrete variable and each connection represents an interaction between at least two discrete variables.

## Patentansprüche

1. Quantenrechenverfahren zum Erhalten einer optimalen Lösung eines Problems mit mehreren diskreten Variablen, wobei das Problem durch eine Kostenfunktion dargestellt wird, das Verfahren umfassend:
- Erzeugen einer Graphenstruktur aus der Kostenfunktion,
- Aufteilen der Graphenstruktur in mindestens zwei disjunkte Teilgraphenstrukturen, wobei jede Teilgraphenstruktur eine Teilmenge der mehreren Variablen umfasst,
- Abbilden jeder Teilgraphenstruktur auf eine lokale Kostenfunktion, die als Hamiltonian lokaler Kosten dargestellt wird,
- Bestimmen, für jeden Hamiltonian lokaler Kosten, aller Eigenzustände, die einer Energie unterhalb einer zuvor bestimmten Grenzenergie entsprechen, unter Verwendung einer Quantenverarbeitungsvorrichtung, wobei jede Variable der Teilmenge mehrerer Variablen durch ein Qubit der Quantenverarbeitungsvorrichtung dargestellt wird, wobei die mindestens zwei Teilgraphenstrukturen miteinander verbunden sind, wobei ein Koppeln einer Teilgraphenstruktur mit einer angrenzenden Teilgraphenstruktur durch eine Kopplungsstärke quantifiziert wird, und wobei die zuvor bestimmte Grenzenergie für jede Teilgraphenstruktur durch Summieren über die Kopplungsstärke jeder ihrer Kopplungen bestimmt wird, und wobei jede der mindestens zwei Teilgraphenstrukturen derart eingeschränkt ist, dass die Kardinalität ihrer Teilmenge der mehreren Variablen kleiner als oder gleich einer Anzahl von Qubits der Quantenverarbeitungsvorrichtung ist,
- Rekombinieren der bestimmten Eigenzustände, wobei die bestimmten Eigenzustände durch Erzeugen einer Darstellung der Kostenfunktion in einem reduzierten Hilbert-Raum (Kosten-Hamiltonian) rekombiniert werden, der durch die bestimmten Eigenzustände aufgespannt wird, wobei der Kosten-Hamiltonian aus zwei Termen besteht,
- wobei der erste Term des Kosten-Hamiltonian über die unterschiedlichen Gemeinschaften summiert, wobei der Summand eine Diagonalmatrix ist, in der die Diagonalelemente durch die bestimmten Energieniveaus in der jeweiligen Gemeinschaft gegeben sind, und
- wobei der zweite Term über alle Gemeinschaftspaare summiert, wobei der Summand eine Diagonalmatrix ist, in der die Diagonaleinträge jedem reduzierten Qubit-Zustandspaar ein Intergemeinschaftskopplungsgewicht zuweisen, und
- Approximieren eines Grundzustands aus den rekombinierten Eigenzuständen, wobei der Grundzustand die optimale Lösung darstellt.

2. Quantenrechenverfahren nach einem der vorstehenden Ansprüche, wobei die Quantenverarbeitungsvorrichtung angepasst ist, um einen ersten Quantenapproximationsoptimierungsalgorithmus zum Bestimmen der Eigenzustände jedes lokalen Kosten-Hamiltonian auszuführen.

3. Quantenrechenverfahren nach dem vorstehenden Anspruch, das ferner aus der Darstellung der Kostenfunktion in dem reduzierten Hilbert-Raum eine reduzierte Graphenstruktur erzeugt und die Verfahrensschritte nach Anspruch 1 für die reduzierte Graphenstruktur rekursiv wiederholt.

4. Quantenrechenverfahren nach einem der vorstehenden Ansprüche, wobei die mindestens zwei disjunkten Teilgraphenstrukturen unter Verwendung eines Verfahrens eines heuristischen Clusterings bestimmt werden.

5. Quantenrechenverfahren nach dem vorstehenden Anspruch, wobei das Verfahren des heuristischen Clusterings das Louvain-Verfahren ist.

6. Quantenrechenverfahren nach einem der vorstehenden Ansprüche, wobei der Hamiltonian lokaler Kosten für jede Teilgraphenstruktur einen Strafterm umfasst, wobei der Strafterm angepasst ist, um dem Energiewert jedes Quantenzustands, der eine Energie unterhalb der Grenzenergie aufweist, eine zuvor bestimmte Strafkonstante derart hinzuzufügen, dass die Quantenverarbeitungsvorrichtung angepasst ist, um alle Eigenzustände zu bestimmen, die Energien unterhalb der Grenzenergie entsprechen.

7. Quantenrechenverfahren nach Anspruch 2, wobei die Quantenverarbeitungsvorrichtung angepasst ist, um einen weiteren Quantenapproximationsoptimierungsalgorithmus zum Approximieren des Grundzustands der Kostenfunktion in dem reduzierten Hilbert-Raum auszuführen.

8. Quantenrechenverfahren nach einem der vorstehenden Ansprüche, wobei die Kostenfunktion, die das Problem darstellt, durch ein Ising-Spinglas-Modell darstellbar ist, wobei das Ising-Spinglas-Modell **gekennzeichnet ist durch** eine paarweise Wechselwirkung zwischen Körpern (Zwei-Körper-Wechselwirkung), wobei die Körper durch Knoten der Graphenstruktur gegeben sind, auf die die Kostenfunktion abgebildet wurde.

9. Quantenrechenverfahren nach einem der vorstehenden Ansprüche, wobei jede der mindestens zwei Teilgraphenstrukturen derart eingeschränkt ist, dass die Kardinalität ihrer Teilmenge der mehreren Variablen kleiner als oder gleich einer Anzahl von fehlerkorrigierten Qubits der Quantenverarbeitungsvorrichtung ist.

10. Quantenrechenverfahren nach einem der vorstehenden Ansprüche, wobei die Graphenstruktur eine Vielzahl von Knoten umfasst, wobei die Vielzahl von Knoten durch eine Vielzahl von Verbindungen verbunden ist, wobei jeder Knoten eine diskrete Variable darstellt und jede Verbindung eine Wechselwirkung zwischen mindestens zwei diskreten Variablen darstellt.

## Revendications

1. Procédé de calcul quantique pour l'obtention d'une solution optimale d'un problème avec de variables multiples discrètes, dans lequel le problème est représenté par une fonction de coût, le procédé comprenant :
- la génération d'une structure de graphe à partir de la fonction de coût,
- la division de la structure de graphe en au moins deux structures de sous-graphe disjointes, dans lequel chaque structure de sous-graphe comprend un sous-ensemble des variables multiples,
- le mappage de chaque structure de sous-graphe à une fonction de coût locale représentée comme un hamiltonien de coût local,
- la détermination, pour chaque hamiltonien de coût local, de tous les états propres correspondant à une énergie inférieure à une énergie de coupure prédéterminée à l'aide d'un dispositif de traitement quantique, dans lequel chaque variable du sous-ensemble de variables multiples est représentée par un qubit du dispositif de traitement quantique, dans lequel les au moins deux structures de sous-graphe sont interconnectées, dans lequel un couplage d'une structure de sous-graphe à une structure de sous-graphe adjacente est quantifié par une force de couplage, et dans lequel l'énergie de coupure prédéterminée est déterminée pour chaque structure de sous-graphe en additionnant la force de couplage de chacun de ses couplages, et dans lequel chacune des au moins deux structures de sous-graphe est contrainte de telle sorte que la cardinalité de son sous-ensemble des variables multiples est inférieure ou égale à un nombre de qubits du dispositif de traitement quantique,
- la recombinaison des états propres déterminés, dans lequel les états propres déterminés sont recombinés en générant une représentation de la fonction de coût dans un espace de Hilbert réduit (hamiltonien de coût) couvert par les états propres déterminés, le hamiltonien de coût étant constitué de deux termes,
- dans lequel le premier terme de l'hamiltonien de coût additionne les différentes communautés, dans lequel la somme est une matrice diagonale dans laquelle les éléments diagonaux sont donnés par les niveaux d'énergie déterminés dans la communauté respective, et
- dans lequel le second terme additionne toutes les paires de communautés et dans lequel la somme est une matrice diagonale dans laquelle les entrées diagonales attribuent un poids de couplage intercommunautaire à chaque paire d'états de qubits réduits, et
- l'approximation d'un état fondamental à partir des états propres recombinés, dans lequel l'état fondamental représente la solution optimale.

2. Procédé de calcul quantique selon l'une des revendications précédentes, dans lequel le dispositif de traitement quantique est conçu pour exécuter un premier algorithme d'optimisation approximative quantique pour déterminer les états propres de chaque hamiltonien de coût local.

3. Procédé de calcul quantique selon la revendication précédente, générant en outre une structure de graphe réduite à partir de la représentation de la fonction de coût dans l'espace de Hilbert réduit, et répétant récursivement les étapes du procédé selon la revendication 1 pour la structure de graphe réduite.

4. Procédé de calcul quantique selon l'une quelconque des revendications précédentes, dans lequel les au moins deux structures de sous-graphe disjointes sont déterminées à l'aide d'un procédé heuristique de regroupement.

5. Procédé de calcul quantique selon la revendication précédente, dans lequel le procédé heuristique de regroupement est le procédé de Louvain.

6. Procédé de calcul quantique selon l'une des revendications précédentes, dans lequel l'hamiltonien de coût local pour chaque structure de sous-graphe comprend un terme de pénalité, dans lequel le terme de pénalité est conçu pour ajouter une constante de pénalité prédéterminée à la valeur énergétique de chaque état quantique ayant une énergie inférieure à l'énergie de coupure, de sorte que le dispositif de traitement quantique est conçu pour déterminer tous les états propres correspondant à des énergies inférieures à l'énergie de coupure.

7. Procédé de calcul quantique selon la revendication 2, dans lequel le dispositif de traitement quantique est conçu pour exécuter un autre algorithme d'optimisation approximative quantique pour l'approximation de l'état fondamental de la fonction de coût dans l'espace de Hilbert réduit.

8. Procédé de calcul quantique selon l'une des revendications précédentes, dans lequel la fonction de coût représentant le problème peut être représentée par un modèle de verre de spin d'Ising, le modèle de verre de spin d'Ising étant **caractérisé par** une interaction par paire entre des corps (interaction à deux corps), dans lequel les corps sont donnés par des sommets de la structure de graphe dans laquelle la fonction de coût a été mappée.

9. Procédé de calcul quantique selon l'une des revendications précédentes, dans lequel chacune des au moins deux structures de sous-graphe est contrainte de telle sorte que la cardinalité de son sous-ensemble de variables multiples soit inférieure ou égale à un nombre de qubits corrigés des erreurs du dispositif de traitement quantique.

10. Procédé de calcul quantique selon l'une des revendications précédentes, dans lequel la structure de graphe comprend une pluralité de sommets, dans lequel la pluralité de sommets est reliée par une pluralité de connexions, dans lequel chaque sommet représente une variable discrète et chaque connexion représente une interaction entre au moins deux variables discrètes.
